# EUROPEAN PATENT SPECIFICATION

(11) **EP 2 725 064 B1**
(45) Date of publication and mention of the grant of the patent: **22.11.2017**
(21) Application number: 13188879.4
(22) Date of filing: 16.10.2013
(51) Int. Cl.: C08L 71/00, C08G 65/00, C08G 65/336, C08L 83/04, C08L 83/14, C08L 83/12, C08G 77/50, C08G 77/46

(54) **Curable Fluoropolyether Gel Composition and Gel Article**
Härtbare Fluorpolyethergelzusammensetzung und Gelartikel
Composition de gel de polyéther fluoré durcissable et article de gel

(30) Priority: 19.10.2012 JP 2012231405
(43) Date of publication of application: 30.04.2014
(73) Proprietor: Shin-Etsu Chemical Co., Ltd., Tokyo (JP)
(72) Inventor: Muto, Mitsuo, Annaka-shi, Gunma (JP); Fukuda, Kenichi, Annaka-shi, Gunma (JP); Shiono, Mikio, Annaka-shi, Gunma (JP)
(74) Representative: Ter Meer Steinmeister & Partner

(56) References cited:
- EP-A1- 1 604 968
- EP-A1- 1 731 567
- EP-A1- 2 719 737
- EP-A2- 2 119 754
- EP-A2- 2 395 062

## Description

### TECHNICAL FIELD

This invention relates to a curable gel composition comprising a fluoropolyether, a platinum based catalyst, and a fluorinated acetylene alcohol as reaction regulator, the composition having advantages including uniform dispersion of the catalyst, especially a coordinate complex compound of the catalyst, storage stability, consistent curability, and cured hardness. It also relates to a gel article using a cured product of the composition.

### BACKGROUND ART

Fluorinated gel compositions and cured gel products thereof are known in the art. For example, Patent Document 1 discloses a fluorinated gel composition comprising a divalent perfluoropolyether-containing compound having two alkenyl groups per molecule, an organohydrogenpolysiloxane having a silicon-bonded hydrogen atom, and a platinum-based catalyst. It is described therein that a reaction regulator such as acetylene compounds may be added as an optional component.

Known reaction regulators include acetylene alcohols such as 1-ethynyl-1-hydroxycyclohexane, 3-methyl-1-butyn-3-ol, 3,5-dimethyl-1-hexyn-3-ol, 3-methyl-1-penten-3-ol, and phenyl butynol, and 3-methyl-3-penten-1-yne, 3,5-dimethyl-3-hexen-1-yne, triallyl isocyanurate, polyvinylsiloxane compounds, organophosphorus compounds, and the like. The addition of the regulator keeps appropriate curing reactivity and shelf stability.

However, separation occurs in the compositions with the lapse of time because these reaction regulators form coordinate complex compounds with platinum-based catalysts, which compounds are least compatible with the base polymer. Since some reaction regulators are volatile, they will volatilize off during the vacuum deaeration step, causing variations in curability, hardness in the cured state, and long-term storage stability. Patent Document 2 discloses a light-emitting diode embedded in a resin encapsulant, where the resin encapsulant is a cured product of a curable composition comprising a linear polyfluoro compound having at least two alkenyl groups in molecule and a perfluoropolyether structure, a fluorinated organohydrogensiloxane having at least two silicon-bonded hydrogen atoms in the molecule and a platinum group metal catalyst.

### Citation List

Patent Document 1: JP 3487744 (US 6040400)
Patent Document 2: EP 2119754

### SUMMARY OF INVENTION

An object of the invention is to provide a curable fluoropolyether-based gel composition comprising a fluoropolyether, a platinum based catalyst, and a fluorinated acetylene alcohol as reaction regulator, the composition having advantages including uniform dispersion of the catalyst, especially a coordinate complex compound of the catalyst, storage stability, consistent curability, and hardness in the cured state; and a gel article using a cured product of the composition.

The inventors have found that an addition reaction curable fluoropolyether-based gel composition comprising (A) a linear polyfluoro compound containing at least two alkenyl groups per molecule and having a perfluoropolyether structure in its backbone, (B) a polyfluoromonoalkenyl compound containing one alkenyl group per molecule and having a perfluoropolyether structure in its backbone, (C) a fluorinated organohydrogensiloxane having at least two silicon-bonded hydrogen atoms per molecule, and (D) a platinum group metal-based hydrosilylation catalyst is improved by adding (E) a fluorinated acetylene alcohol as reaction regulator. The resulting composition has advantages including uniform dispersion of the catalyst, especially a coordinate complex compound of the catalyst, storage stability, consistent curability, and hardness in the cured state.

Accordingly, in one aspect, the invention provides a curable fluoropolyether-based gel composition consisting of
(A) 100 parts by weight of a linear polyfluoro compound containing at least two alkenyl groups per molecule and having a perfluoropolyether structure in the backbone,
(B) 1 to 300 parts by weight of a polyfluoromonoalkenyl compound containing one alkenyl group per molecule and having a perfluoropolyether structure in the backbone,
(C) a fluorinated organohydrogensiloxane having at least two silicon-bonded hydrogen atoms (i.e., SiH groups) and at least one monovalent perfluoroalkyl, monovalent perfluorooxyalkyl, divalent perfluoroalkylene or divalent perfluorooxyalkylene which is linked with the silicon atoms through a divalent linkage selected from among the following groups: -CH₂CH₂-, -CH₂CH₂CH₂-, -CH₂CH₂CH₂OCH₂-, - CH₂CH₂CH₂-NH-CO-,-CH₂CH₂CH₂-N(Ph)-CO-, -CH₂CH₂CH₂-N(CH₃)-CO-, -CH₂CH₂CH₂-N(CH₂CH₂)-CO-, -CH₂CH₂-Si(CH₃)₂-Ph'-N(CH₃)-CO-,-CH₂CH₂CH₂-Si(CH₃)₂-Ph'-N(CH₃)-CO-, and -CH₂CH₂CH₂-O-CO-, per molecule, in an amount to provide 0.5 to 3.0 moles of SiH groups per mole of alkenyl groups in components (A) and (B),
(D) a platinum group metal-based hydrosilylation catalyst in an amount to provide 0.1 to 500 ppm of platinum group metal, and
(E) 0.05 to 3.0 parts by weight of a fluorinated acetylene and(F) 0 to 150 parts by weight per 100 parts by weight of components (A) and (B) combined of at least one perfluoropolyether compound selected from compounds having the general formulae (1) to (3):

   A-O-(CF₂CF₂CF₂O)ₐ-A (1)

   wherein A is a group of the formula: C_{b}F_{2b+1}-, a is an integer of 1 to 500, and b is an integer of 1 to 3,

   A-O-(CF₂O)_{c}-(CF₂CF₂O)_{d}-A (2)

   wherein A is as defined above, c and d each are an integer of 1 to 300, 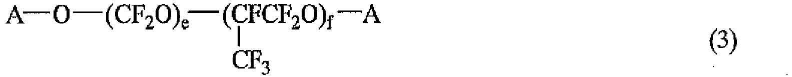 wherein A is as defined above, e and f each are an integer of 1 to 300.

In a preferred embodiment, component (A) is a partially branched linear polyfluoro compound of the general formula (4):

CH₂=CH-(X)_{g}-Rf¹-(X')_{g}-CH=CH₂ (4)

wherein X is -CH₂-, -CH₂O-, -CH₂OCH₂- or -Y-NR¹-CO-, wherein Y is -CH₂-, -Si(CH₃)₂CH₂CH₂CH₂-, -Si(CH₃)(CH=CH₂)CH₂CH₂CH₂-, or an o-, m- or p-dimathylsilylphenylene group of the structural formula (Z): 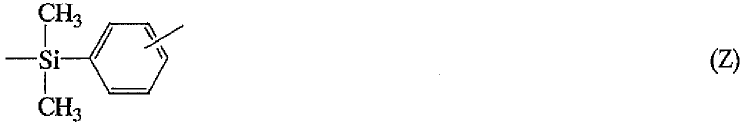 and R¹ is hydrogen or a substituted or unsubstituted monovalent hydrocarbon group; X' is -CH₂-, -CH₂-, -CH₂OCH₂-or -CO-NR²-Y'-, wherein Y' is -CH₂-, -CH₂CH₂CH₂Si(CH₃)₂-, -CH₂CH₂CH₂Si(CH₃)(CH=CH₂)-, or an o-, m- or p-dimethylsilylphenylene group of the structural formula (Z'): 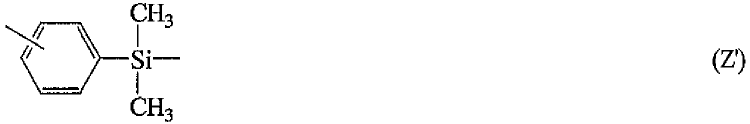 and R² is as defined for R¹; Rf¹ is a divalent perfluoropolyether group of the general formula (i) or (ii): 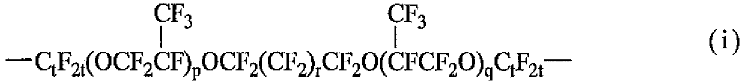 wherein p and q each are an integer from 1 to 150, the sum p+q is from 2 to 200 on average, r is an integer from 0 to 6, and t is 2 or 3, 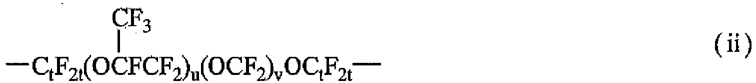 wherein u is an integer from 1 to 200, v is an integer from 1 to 50, t is as defined above; and g is independently 0 or 1. The fluorinated acetylene alcohol (E) has the general formula (5) or (6): 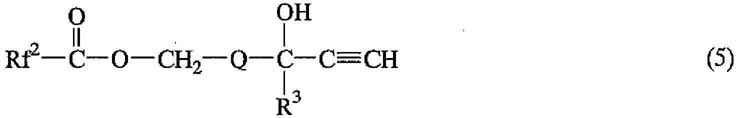 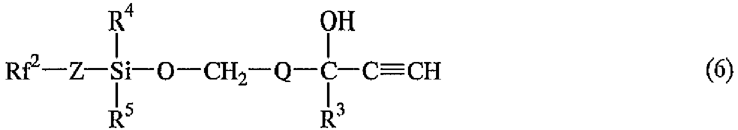 wherein Rf² is a perfluoroalkyl group of 3 to 100 carbon atoms, which may be separated by an ether bond and which may be branched, Q is a divalent hydrocarbon group of 1 to 6 carbon atoms, R³, R⁴ and R⁵ are each independently an alkyl group of 1 to 4 carbon atoms, and Z is a divalent organic group of 1 to 20 carbon atoms.

In another aspect, the invention provides a gel article comprising a cured product of the curable fluoropolyether-based gel composition defined above.

The gel article may be used in automobiles, chemical plants, inkjet printers, semiconductor manufacturing lines, analytical and scientific instruments, medical equipment, aircraft or fuel cell systems.

### ADVANTAGEOUS EFFECTS OF INVENTION

The curable fluoropolyether-based gel compositions of the invention cure into products having improved properties including solvent resistance, chemical resistance, heat resistance, low-temperature properties, low moisture permeability, and electric properties. The cured products thus find use in automobiles, chemical plants, inkjet printers, semiconductor manufacturing lines, analytical and scientific instruments, medical equipment, aircraft or fuel cell systems.

### DESCRIPTION OF EMBODIMENTS

In the disclosure, the singular forms "a," "an" and "the" include plural referents unless the context clearly dictates otherwise. As used herein, the notation (Cn-Cm) means a group containing from n to m carbon atoms per group. The abbreviation "Me" stands for methyl, "Ph" for phenyl, "Ph' " for phenylene, "pbw" for parts by weight, and "ppm" for parts by weight per million parts by weight.

### Component A

Component (A) is a linear polyfluoro compound having at least two alkenyl groups per molecule and a perfluoropolyether structure in its backbone, which is preferably represented by the general formula (4).

CH₂=CH-(X)_{g}-Rf¹-(X')_{g}-CH=CH₂ (4)

Herein X is -CH₂-, -CH₂O-, -CH₂OCH₂- or -Y-NR¹-CO- , wherein Y is -CH₂-, -Si(CH₃)₂CH₂CH₂CH₂-, -Si(CH₃)(CH=CH₂)CH₂CH₂CH₂-, or an o-, m- or p-dimethylsilylphenylene group of the structural formula (Z): 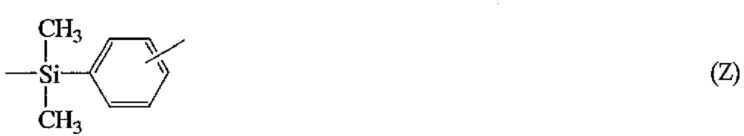 and R¹ is hydrogen or a substituted or unsubstituted monovalent hydrocarbon group. X' is -CH₂-, -OCH₂-, -CH₂OCH₂-or -CO-NR²-Y'-, wherein Y' is -CH₂-, -CH₂CH₂CH_{z}Si(CH₃)₂-, -CH₂CH₂CH₂Si(CH₃)(CH=CH₂)-, or an o-, m- or p-dimethylsilylphenylene group of the structural formula (Z'): 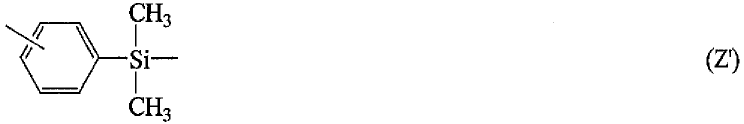 and R² is as defined for R¹. Rf¹ is a divalent perfluoropolyether group of the general formula (i) or (ii): 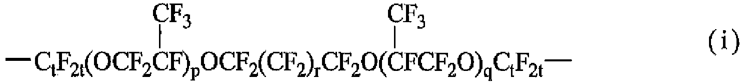 wherein p and q each are an integer from 1 to 150, the sum p+q is from 2 to 200 on average, r is an integer from 0 to 6, and t is 2 or 3, 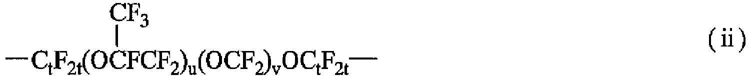 wherein u is an integer from 1 to 200, v is an integer from 1 to 50, t is as defined above; and g is independently 0 or 1.

R¹ and R² each are a hydrogen atom or a monovalent hydrocarbon group, preferably of 1 to 12 carbon atoms, and more preferably 1 to 10 carbon atoms. Exemplary hydrocarbon groups include alkyl groups such as methyl, ethyl, propyl, butyl, hexyl, cyclohexyl and octyl; aryl groups such as phenyl and tolyl; aralkyl groups such as benzyl and phenylethyl; and substituted forms of the foregoing monovalent hydrocarbon groups in which some or all hydrogen atoms are substituted by halogen atoms such as fluorine.

Rf¹ is a divalent perfluoropolyether group, preferably having the general formula (i) or (ii). 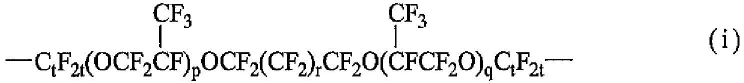 Herein p and q each are an integer from 1 to 150, preferably 10 to 150, the sum p+q is on average from 2 to 200, preferably 20 to 160, r is an integer from 0 to 6, preferably 0 to 4, and t is 2 or 3. 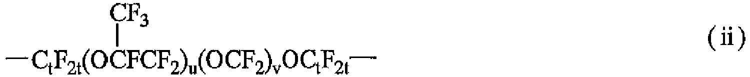 Herein u is an integer from 1 to 200, preferably 20 to 160, v is an integer from 1 to 50, preferably 5 to 40, and t is 2 or 3.

Preferred examples of the Rf¹ group include those of the following three formulas, with the divalent groups of the first formula being more preferred. 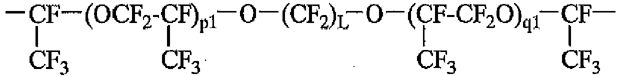 Herein p1 and q1 each are an integer of 1 to 150, p1+q1 is from 2 to 200 on average, and L is an integer of 2 to 6. 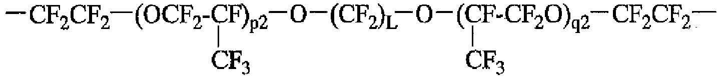 Herein p2 and q2 each are an integer of 1 to 150, p2+q2 is from 2 to 200 on average, and L is an integer of 2 to 6. 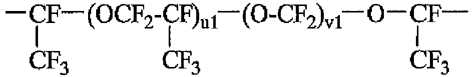 Herein u1 is an integer of 1 to 200, and v1 is an integer of 1 to 50.

Preferred as component (A) are compounds of the general formula (7). 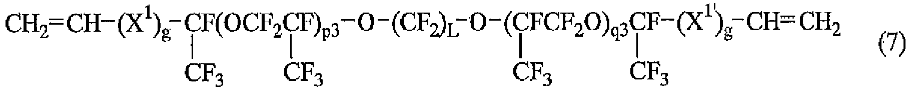 Herein, X¹ is -CH₂-, -CH₂O-, -CH₂OCH₂- or -Y-NR¹¹-CO-, wherein Y is -CH₂-, -Si(CH₃)₂CH₂CH₂CH₂-, -Si(CH₃)(CH=CH₂)CH₂CH₂CH₂-, or an o-, m- or p-dimethylsilylphenylene group of the structural formula (Z): 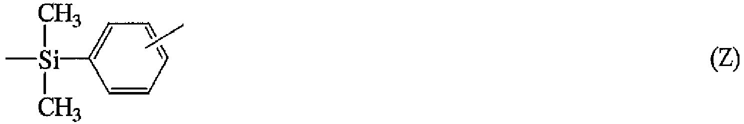 and R¹¹ is hydrogen, methyl, phenyl or allyl; X^{1'} is -CH₂-, -OCH₂- , -CH₂OCH₂- or -CO-NR¹²-Y'-, wherein Y' is -CH₂-, -CH₂CH₂CH₂Si(CH₃)₂-, -CH₂CH₂CH₂Si(CH3) (CH=CH₂)-, or an o-, m- or p-dimethylsilylphenylene group of the structural formula (Z'): 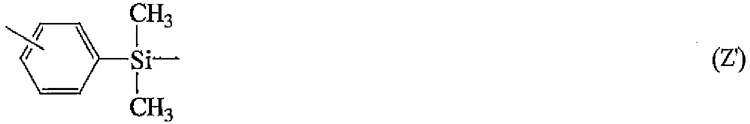 and R¹² is a group like R¹¹; the subscript g is each independently 0 or 1, L is an integer from 2 to 6, p3 and q3 each are an integer of 1 to 150, and p3+q3 is from 2 to 200 on average.

Examples of the linear polyfluoro compound of formula (4) include those compounds having the following formulas.

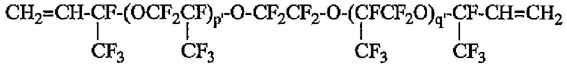

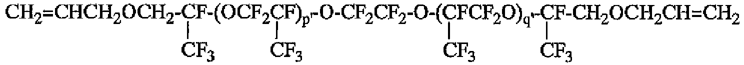

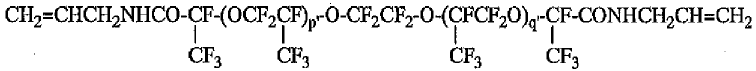

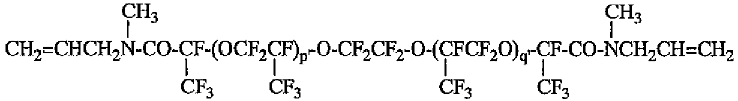

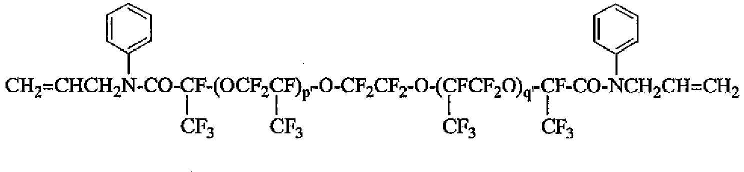

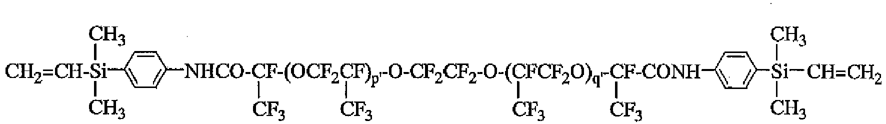

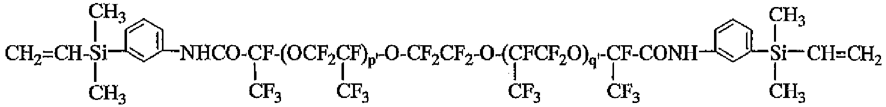

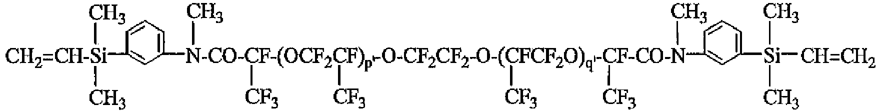

In the above formulas, p' and q' each are an integer of 1 to 150, and the sum p'+q' is from 2 to 200.

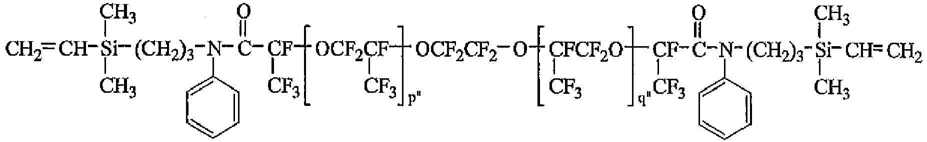

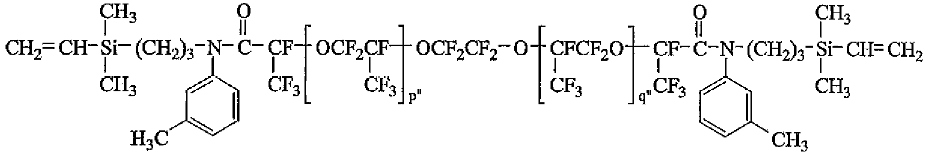

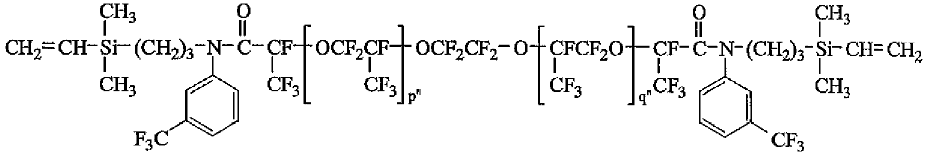

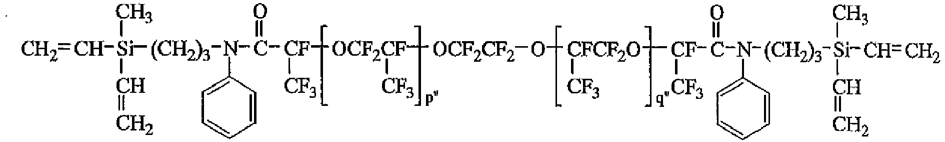

In the above formulas, p" and q" each are an integer of 1 to 150, and the sum p"+q" is from 2 to 200.

The linear polyfluoro compound of formula (4) preferably has an alkenyl content of 0.005 to 0.050 mle/100 g, more preferably 0.007 to 0.040 mol/100 g. With too low an alkenyl content, the cured product may have low physical strength or may not be obtained. Too high an alkenyl content may lead to a risk of oil bleeding.

Preferably the linear polyfluoro compound of formula (4) has a viscosity at 23°C in a range of 100 to 100,000 mm²/s, more preferably 500 to 50,000 mm²/s, and even more preferably 1,000 to 20,000 mm²/s, as measured by an Ostwald's viscometer (relative viscosity), because the composition comprising the same can have appropriate physical properties when used for such purposes as sealing, potting, coating and impregnation, and also in the cured form. An optimum viscosity for the intended application can be selected from within this viscosity range.

Sometimes the linear polyfluoro compound of formula (4) may be tailored to an appropriate weight average molecular weight for the intended application. In this case, a linear perfluoropolyether compound as mentioned above is subjected to hydrosilylation reaction with an organosilicon compound having two hydrosilyl (Si-H) groups in the molecule in a conventional manner and under ordinary conditions to form a chain-extended product, which may be used as component (A).

The linear polyfluoro compounds may be used alone or in admixture of two or more.

### Component B

Component (B) is a polyfluoromonoalkenyl compound containing one alkenyl group per molecule and having a perfluoropolyether structure in the backbone, which is preferably represented by the general formula (8).

Rf³-(X')_{g}-CH=CH₂ (8)

In formula (8), X' is -CH₂-, -OCH₂- , -CH₂OCH₂- or -CO-NR²-Y'- , wherein Y' is -CH₂-, -CH₂CH₂CH₂Si(CH₃)₂-, -CH₂CH,CH₂Si(CH₃)(CH=CH₂)-, or an o-, m- or p-dimethylsilylphenylene group of the structural formula (Z'): 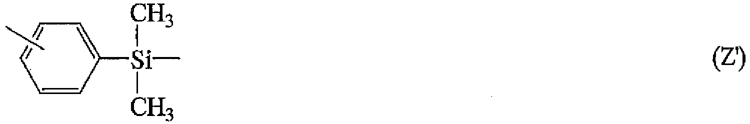 and R² is hydrogen or a substituted or unsubstituted monovalent hydrocarbon group, which is as exemplified above for R² in formula (4). Rf³ is a group containing a monovalent perfluoropolyether structure, preferably a structure of the following formula:

CₛF₂ₛ₊₁O(CₕF₂ₕO)ᵢCₜ,F_{2t'}-

or

F(CₕF₂ₕO)ᵢCₜ,F₂ₜ,-

wherein s is an integer of 1 to 8, h is an integer of 1 to 6, i is an integer of 0 to 200, preferably 10 to 100, and more preferably 20 to 50, and t' is 1 or 2. The subscript g is 0 or 1.

Examples of Rf³ in formula (8) are given below.

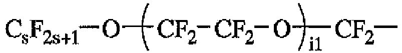

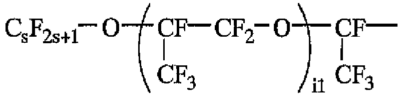

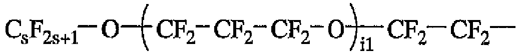

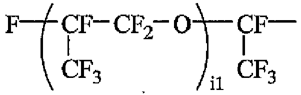

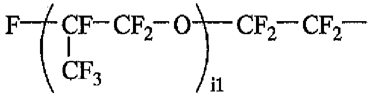

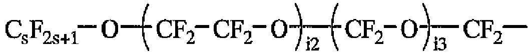

Herein s is an integer of 1 to 8, il is an integer of 0 to 200, and i2+i3 is an integer of 0 to 200.

Examples of the polyfluoromonoalkenyl compound of formula (8) are given below.

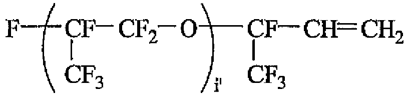

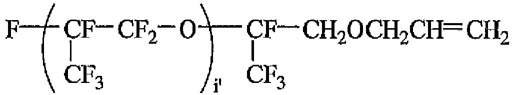

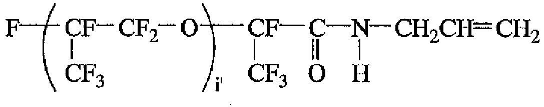

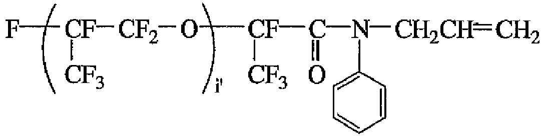

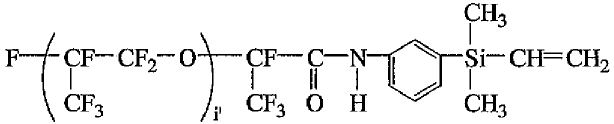

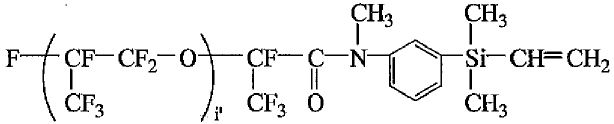

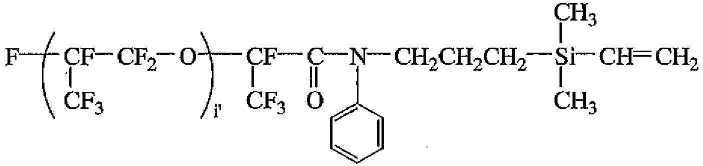

Herein i' is an integer of 0 to 200.

The polyfluoromonoalkenyl compound preferably has an alkenyl content of 0.005 to 0.050 mol/100 g, more preferably 0.010 to 0.040 mol/100 g. Too low an alkenyl content may add to the polymer viscosity, adversely affecting working efficiency. Too high an alkenyl content may reduce the solubility of the compound in the composition, resulting in poor outer appearance and non-uniform cured physical properties.

It is preferred from the standpoints of uniform cured physical properties and working efficiency that the polyfluoromonoalkenyl compound have a viscosity at 23°C in a range of 50 to 5,000 mm²/s, more preferably 100 to 2,000 mm²/s, and even more preferably 200 to 1,000 mm²/s. An optimum viscosity for the intended application can be selected from within this viscosity range.

In the composition, the polyfluoromonoalkenyl compound (B) is used in an amount of 1 to 300 parts, preferably 1 to 150 parts by weight per 100 parts by weight of the linear fluorinated polymer (A). If the amount of component (B) is less than 1 pbw, the crosslinking density after curing may become higher, and the cured product become rubbery rather than gel. If the amount of component (B) exceeds 300 pbw, the crosslinking density after curing may become lower, and the cured product become liquid rather than gel.

### Component C

Component (C) is a fluorinated organohydrogensiloxane having at least two silicon-bonded hydrogen atoms per molecule. Specifically, it is a fluorinated organohydrogensiloxane having at least one, preferably 1 to 10, fluorinated organic group and at least two, preferably 3 to 50, silicon-bonded hydrogen atoms per molecule. The silicon-bonded hydrogen atom is sometimes referred to as hydrosilyl or SiH group. In the composition, component (C) functions as a crosslinker and/or chain extender for components (A) and (B). For compatibility with and dispersibility in components (A) and (B), and uniformity after curing, component (C) has on the molecule at least one fluorinated group selected from among monovalent perfluoroalkyl groups, monovalent perfluorooxyalkyl groups, divalent perfluoroalkylene groups and divalent perfluorooxyalkylene groups.

Suitable mono- or divalent fluorinated organic groups include those of the following general formulas:

CⱼF₂ⱼ₊₁-,

-CⱼF₂ⱼ-,

wherein j is an integer from 1 to 20, and preferably from 2 to 10, 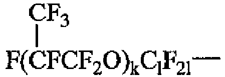 wherein k is an integer from 1 to 200, and preferably from 1 to 100, and 1 is an integer from 1 to 3, 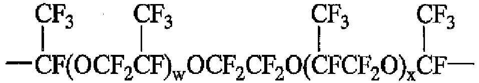 wherein w and x each are an integer of at least 1, preferably 1 to 100, the sum w+x is on average from 2 to 200, and preferably 2 to 100, and

-(CF₂O)_{y}- (CF₂CF₂O)_{z}-CF₂-

wherein y and z each are an integer from 1 to 50, preferably 1 to 40.

Divalent linkages for linking the above perfluoroalkyl, perfluorooxyalkyl, perfluoroalkylene or perfluorooxyalkylene groups with silicon atoms include alkylene groups, arylene groups and combinations thereof, which may be separated by an ether-bonding oxygen atom, amide bond, carbonyl bond, ester bond, diorganosilylene group. Specific examples include divalent linkages having 2 to 12 carbon atoms, such as -CH₂CH₂- , -CH₂CH₂CH₂.- , -CH₂CH₂CH₂OCH₂-, -CH₂CH₂CH₂-NH-CO-, -CH₂CH₂CH₂-N(Ph)-CO-, -CH₂CH₂CH₂-N(CH₃)-CO-, -CH₂CH₂CH₂-N(CH₂CH₃) -CO-, -CH₂CH₂-Si (CH₃)₂-Ph'-N(CH₃)-CO-, -CH₂CH₂CH₂-Si(CH₃)₂-Ph'-N(CH₃)-CO-, and -CH₂CH₂CH₂-O-CO-.

In addition to the mono- or divalent fluorinated organic group and silicon-bonded hydrogen atom, the fluorinated organohydrogensiloxane (C) may contain another monovalent substituent group bonded to a silicon atom. Suitable other substituent groups are substituted or unsubstituted hydrocarbon groups of 1 to 20 carbon atoms, preferably 1 to 12 carbon atoms including alkyl groups such as methyl, ethyl, propyl, butyl, hexyl, cyclohexyl, octyl, and decyl, alkenyl groups such as vinyl and allyl, aryl groups such as phenyl, tolyl and naphthyl, aralkyl groups such as benzyl and phenylethyl, and substituted forms of the foregoing in which some or all hydrogen atoms are substituted by chlorine atoms, cyano groups such as chloromethyl, chloropropyl, and cyanoethyl.

The fluorinated organohydrogensiloxane (C) may be cyclic, chain-like, three-dimensional network or combinations thereof. Although the number of silicon atoms in the fluorinated organohydrogensiloxane is not particularly limited, it is generally from 2 to about 60, preferably from 3 to about 30.

Illustrative examples of component (C) having a mono-or divalent fluorinated organic group and silicon-bonded hydrogen atom include the following compounds.

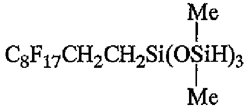

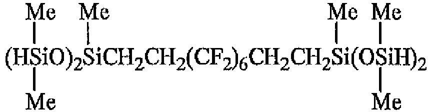

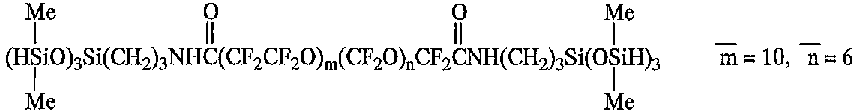

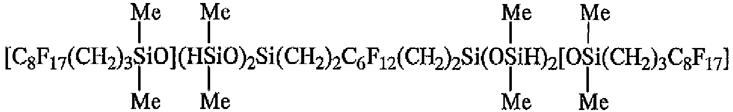

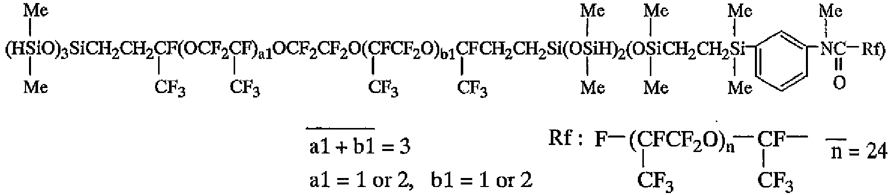

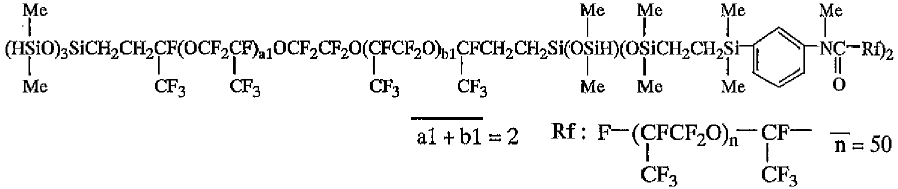

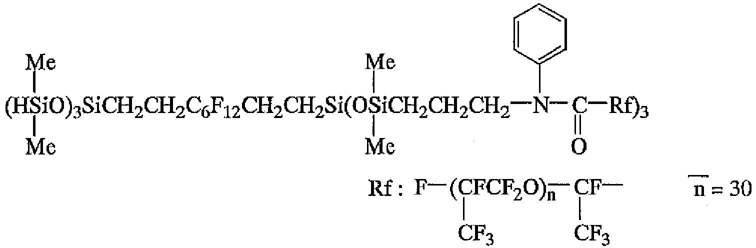

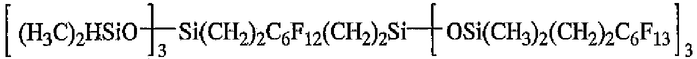

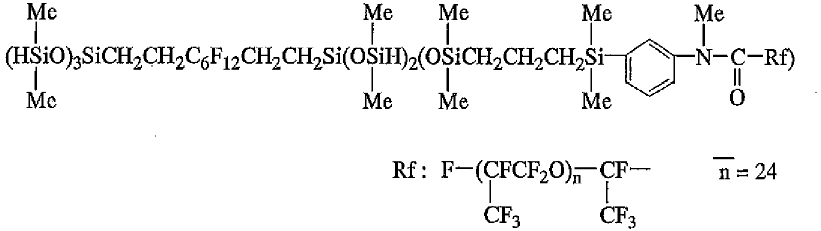

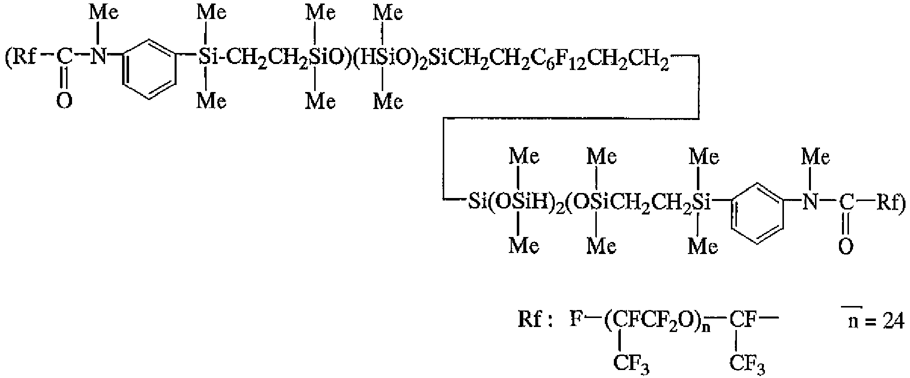

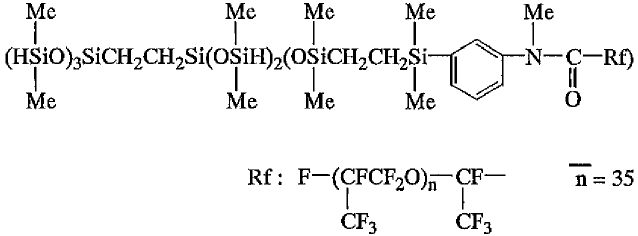

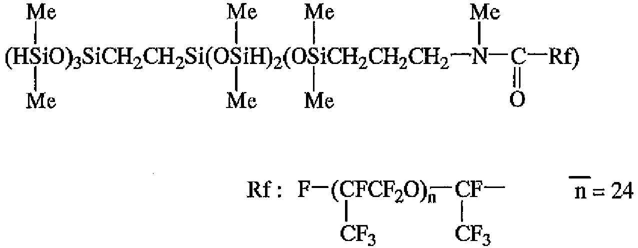

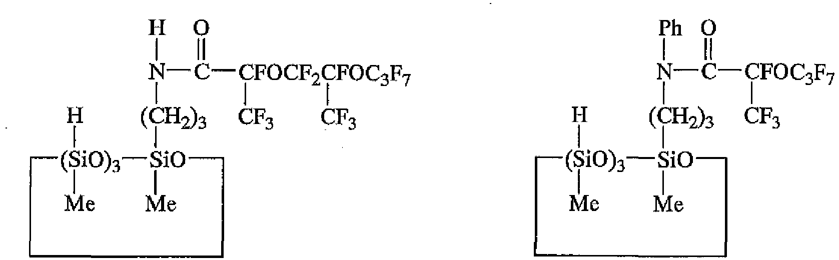

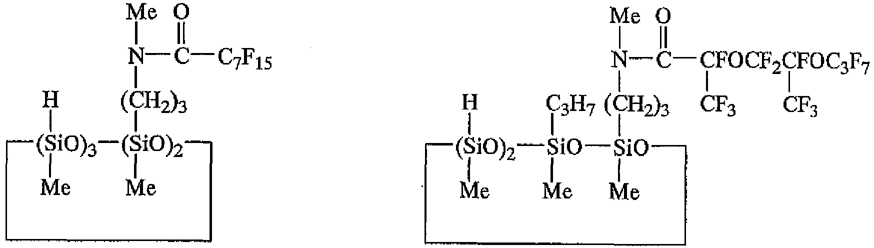

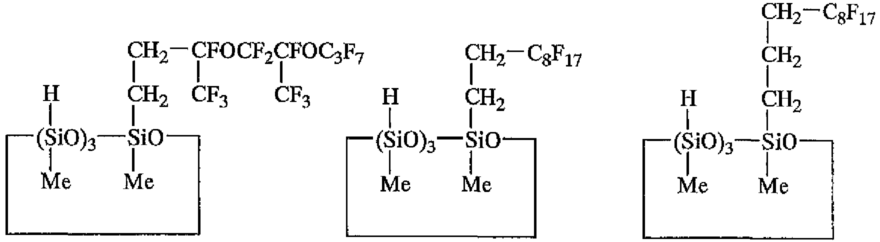

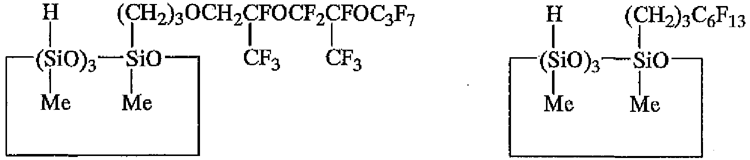

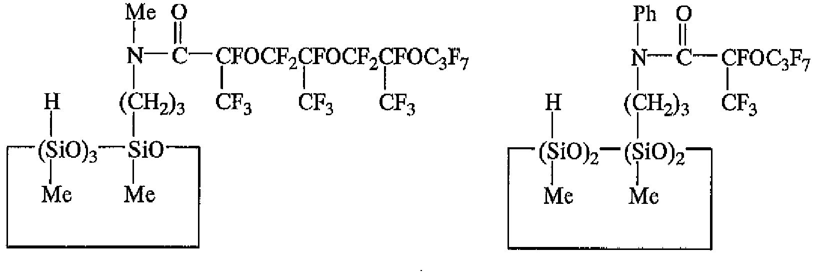

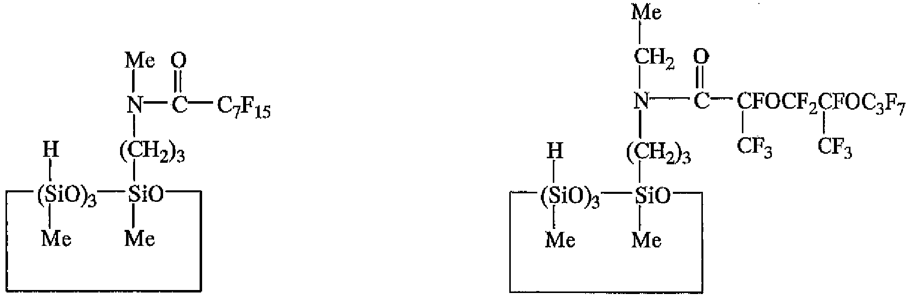

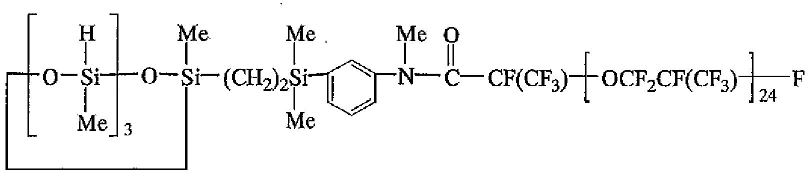

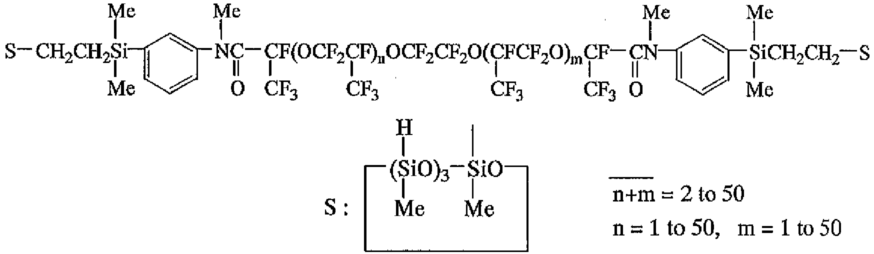

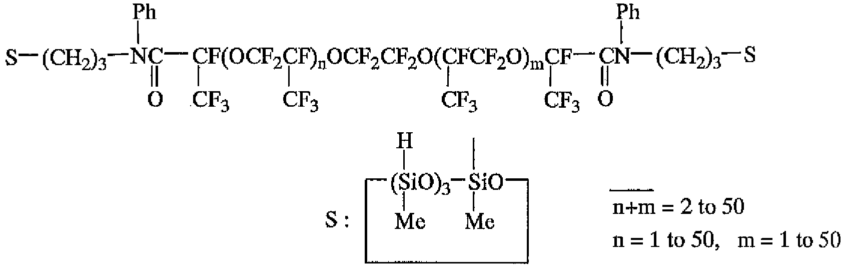

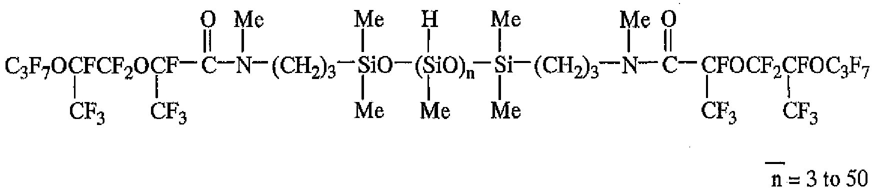

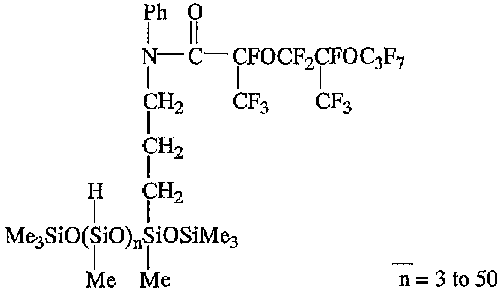

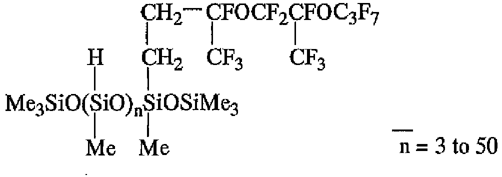

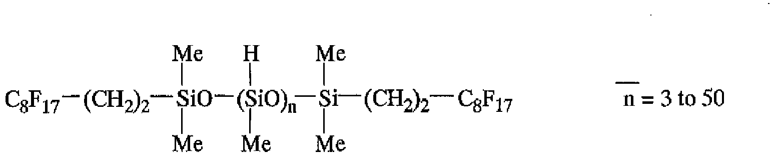

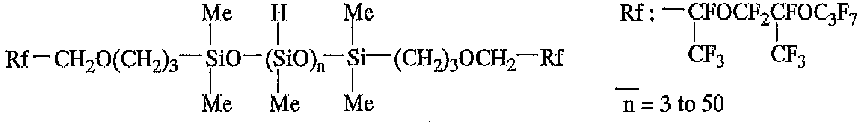

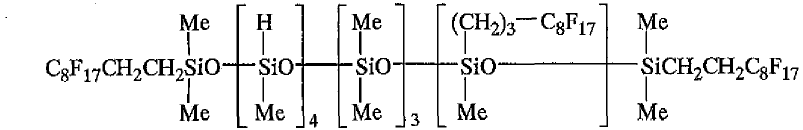

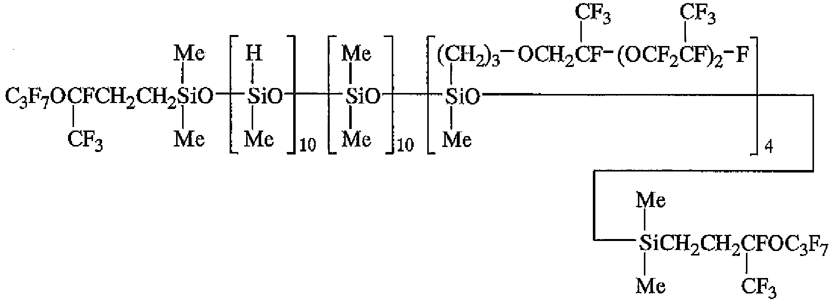

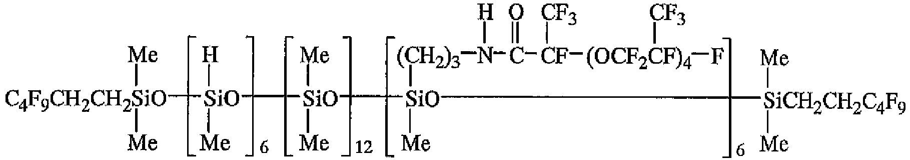

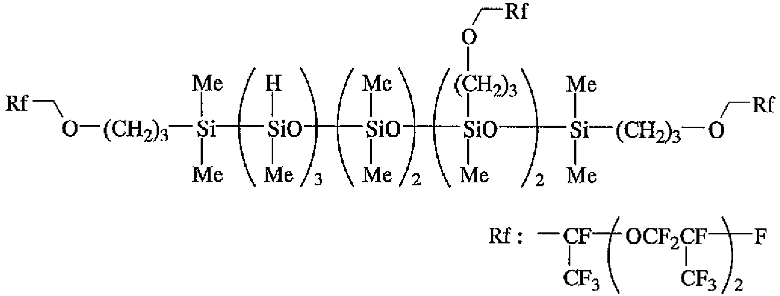

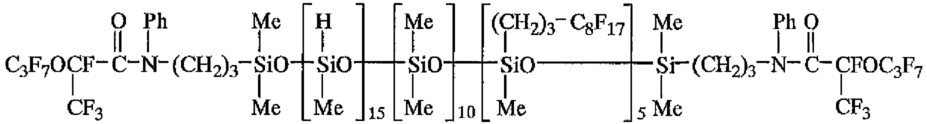

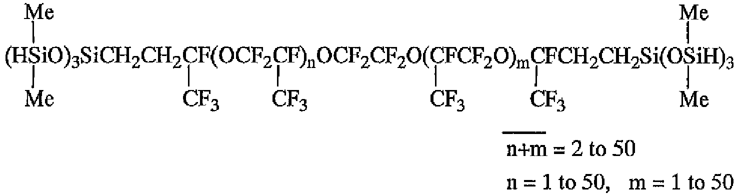

The fluorinated organohydrogensiloxane (C) preferably has a SiH content of 0.0003 to 0.0100 mol/g, more preferably 0.0005 to 0.0050 mol/g. With too low a SiH content, the cured product may have poor physical properties. With too high a SiH content, foaming may occur upon curing, and the cured product has physical properties which may change with time.

The fluorinated organohydrogensiloxanes may be used singly or as combinations of two or more thereof.

Component (C) is blended in an effective amount for hydrosilylation reaction with alkenyl groups in components (A) and (B), and specifically a sufficient amount to provide 0.5 to 3.0 moles, and preferably 0.8 to 2.0 moles of hydrosilyl (SiH) groups per mole of alkenyl groups (e.g., vinyl, allyl or cycloalkenyl) in components (A) and (B). Too few hydrosilyl ≡Si-H) groups may lead to an Insufficient crosslinking density, failing to obtain a properly cured product. Too many hydrosilyl groups may result in foaming during the curing step.

### Component D

Component (D) is a platinum group metal-based catalyst which is a hydrosilylation reaction catalyst. The hydrosilylation catalyst promotes addition reaction between alkenyl groups in components (A) and (B) and hydrosilyl groups in component (C). The hydrosilylation catalysts are generally noble metals or compounds thereof, and thus expensive. Of these, platinum or platinum compounds are often used because they are readily available.

Exemplary platinum compounds include chloroplatinic acid and complexes of chloroplatinic acid with olefins (e.g., ethylene), alcohols and vinyl siloxanes, and metallic platinum on supports such as silica, alumina and carbon. Known platinum group metal catalysts other than platinum compounds include rhodium, ruthenium, iridium and palladium compounds, for example, RhCl(PPh₃)₃, RhCl(CO)(PPh₃)₂, Ru₃(CO)₁₂, IrCl(CO)(PPh₃)₂ and Pd(PPh₃)₄·

If these catalysts are solid catalysts, they may be used in a solid state. A more uniform cured product may be obtained by previously dissolving chloroplatinic acid or a complex thereof in a suitable solvent so that the resulting solution is compatible with components (A) and (B).

Component (D) may be used in a catalytic amount, which typically corresponds to 0.1 to 500 ppm, preferably 1 to 100 ppm of platinum group metal based on the weight of component (A).

### Component E

Component (E) is a fluorinated acetylene alcohol which serves as a regulator for hydrosilylation reaction. Inclusion of component (E) is effective for providing the composition with appropriate curability and shelf stability. Component (E) is an acetylene alcohol having a perfluoroalkyl group which may contain an ether bond or be branched. Preferably the fluorinated acetylene alcohol has the general formula (5) or (6). 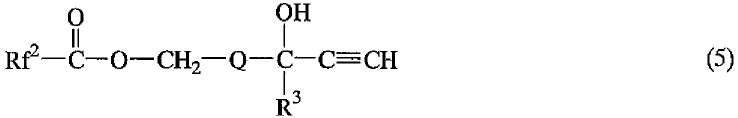 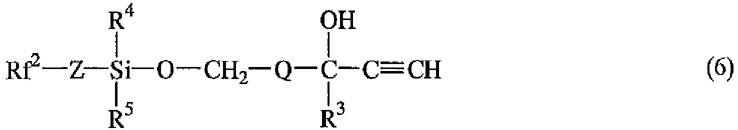 Herein Rf² is a perfluoroalkyl group of 3 to 100 carbon atoms which may be separated by an ether bond and which may be branched, Q is a divalent hydrocarbon group of 1 to 6 carbon atoms, R³, R⁴, and R⁵ are each independently an alkyl group of 1 to 4 carbon atoms, and Z is a divalent organic group of 1 to 20 carbon atoms.

Exemplary of Rf² in formulae (5) and (6) are the following structures wherein n' and m' are integers in the indicated range.

C_{n'}F_{2n'+1}-

n' = 3 to 10

CF₃O-(CF₂CF₂O)_{n'}-CF₂-

n' = 1 to 14

C₂F₅O-(CF₂CF₂O)_{n'}-CF₂-

n' = 0 to 13

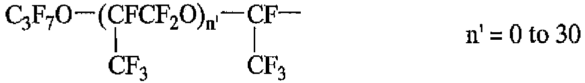

C₃F₇O-(CF₂CF₂CF₂O)_{n'}-CF₂CF₂-

n' = 0 to 8

CF₃O-(CF₂CF₂O)_{n'}-(CF₂O)_{m'}-CF₂- n' ≥ 1,

m' ≥ 1, and 2n'+m' ≤ 30

Q is a divalent C₁-C₆ hydrocarbon group, for example, methylene, ethylene, n-propylene, n-butylene, isobutylene, and phenylene. Inter alia, methylene and ethylene are preferred.

R³, R⁴, and R⁵ are each independently C₁-C₄ alkyl, for example, methyl, ethyl, n-propyl, isopropyl, n-butyl, isobutyl or t-butyl. Preferably R³ is methyl or ethyl, more preferably methyl, and R⁴ and R⁵ are methyl or n-butyl.

Z is a divalent organic group of 1 to 20 carbon atoms. The divalent organic group is not particularly limited as long as the carbon count is 1 to 20. An oxygen atom, nitrogen atom, carbonyl radical may intervene in the organic group. Exemplary of Z are the following structures:

-(CH₂)_{B}-

wherein B is an integer of 1 to 10, preferably 2 to 4,

-(CH₂)-O-(CH₂)C-

wherein C is an integer of 1 to 9, preferably 2 to 4, 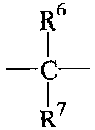 wherein R⁶ and R⁷ are each independently hydrogen or C₁-C₉ alkyl (e.g., methyl, ethyl, propyl or cyclohexyl), 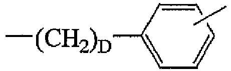 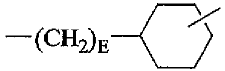 wherein D and E each are 0 or an integer of 1 to 4, preferably 0, 1 or 2.

Illustrative examples of the fluorinated acetylene alcohol (E) are given by the following structural formulae.

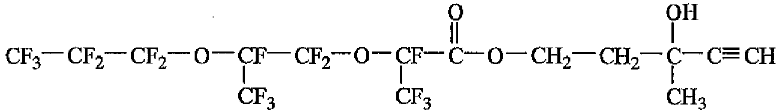

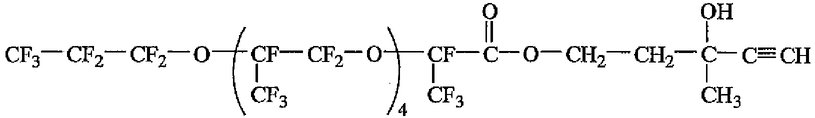

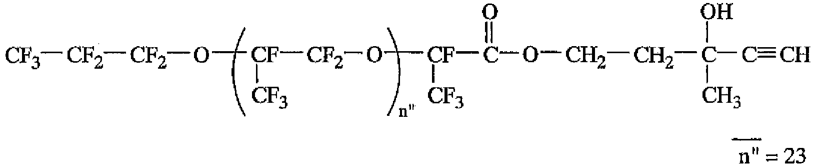

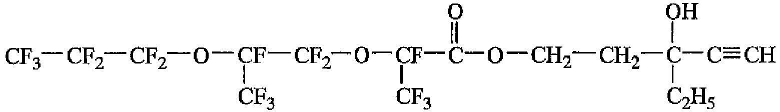

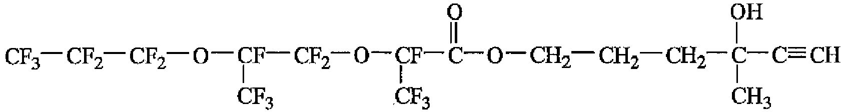

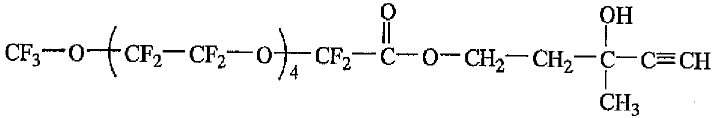

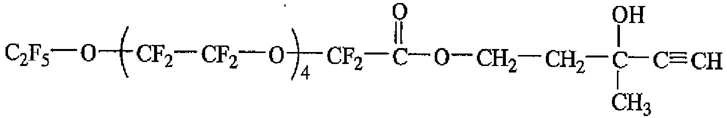

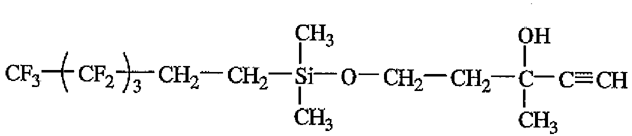

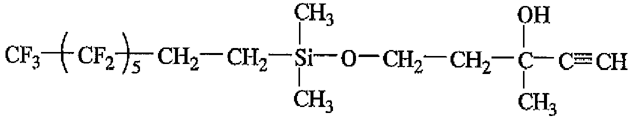

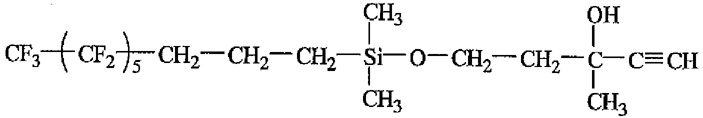

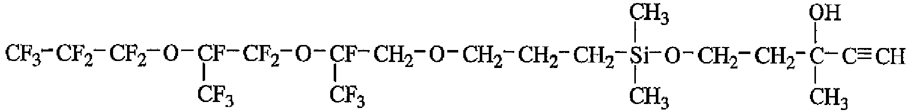

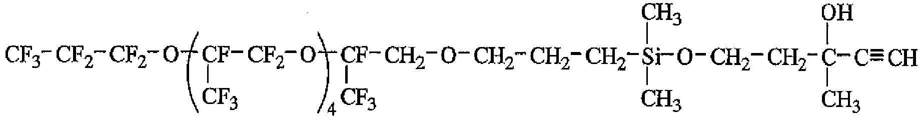

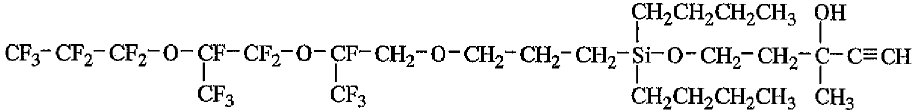

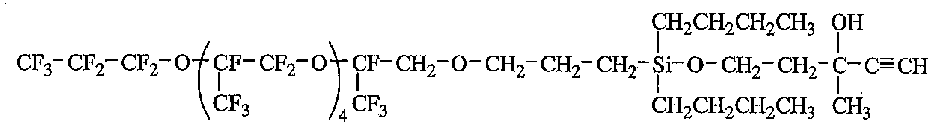

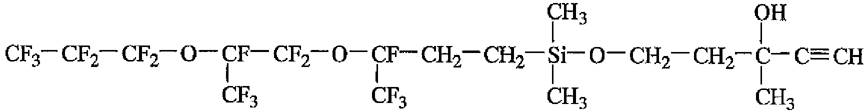

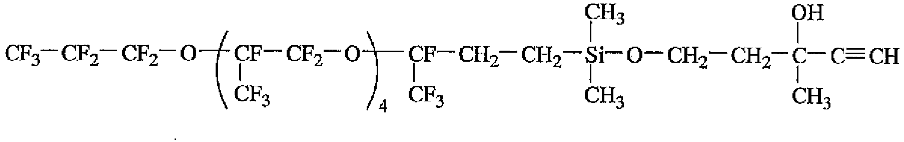

Component (E) is blended in an amount of 0.05 to 3.0 parts, preferably 0.1 to 2.0 parts by weight per 100 parts by weight of component (A). Less than 0.05 pbw of component (E) may not ensure that the catalyst coordinate complex remains uniformly dispersed and stable during shelf storage. More than 3.0 pbw of component (E) may inhibit the composition from curing and the cured product may have poor physical properties.

### Component F

In the curable fluoropolyether-based gel composition, there may be further included (F) a non-functional perfluoropolyether compound which is at least one compound selected from the compounds having the general formulae (1) to (3).

A-O-(CF₂CF₂CF₂O)ₐ-A (1) Herein A is a group of the formula: C_{b}F_{2b+1}- wherein b is an integer of 1 to 3, and a is an integer from 1 to 500, preferably 10 to 300.

A-O-(CF₂O)_{c}-(CF₂CF₂O)_{d}-A (2) Herein A is as defined above, c and d each are an integer from 1 to 300, preferably 2 to 100.

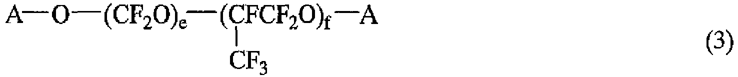

Herein A is as defined above, e and f each are an integer from 1 to 300, preferably 2 to 100. Component (F) serves to improve the chemical resistance, solvent resistance and low-temperature characteristics of the cured gel product at no expense of physical properties. In particular, blending of component (F) in the curable fluoropolyether-based gel composition is effective for imparting improved low-temperature properties, typically a lower glass transition temperature.

The amount of component (F) blended is preferably 0 to 150 parts, more preferably 0.1 to 100 parts, and even more preferably 0.5 to 50 parts by weight per 100 parts by weight of components (A) and (B) combined. With more than 150 pbw of component (F), the cured gel product may allow for oil bleeding with the lapse of time.

### Gel composition

The curable fluoropolyether-based gel composition may be prepared by mixing components (A) to (F) and optional components on a mixing device such as planetary mixer, Ross mixer or Hobart mixer or a kneading device such as kneader or three-roll mill until uniform.

The method of preparing the gel composition is not particularly limited. The gel composition may be prepared by milling the necessary components together. The composition may be formulated as one part or two parts which are mixed on use. For example, one part contains components (A), (B), (D) and (F), and the other part contains components (A), (B), (C), (E), and (F).

For ease of handling, discharging, molding and processing, the curable fluoropolyether-based gel composition preferably has a viscosity at 23°C in a range of 50 to 100,000 mPa·s, more preferably 100 to 70,000 mPa·s, and even more preferably 300 to 50,000 mPa·s, as measured by a rotational viscometer.

In curing, it is recommended to heat the composition to promote curing. The heat cure may be performed in a well-known manner, for example, by heating at a temperature of 60 to 150°C for a time of 30 to 180 minutes.

The gel compositions of the invention are useful as the potting, coating or similar agent for automotive parts, electric/electronic parts and the like. More illustratively, they are useful as the protective coating and potting agents for detectors and sensors used in automobile control systems, such as pressure sensors, gas concentration detectors, and temperature sensors; the protective sealing agent for sensors and instruments exposed to gases, hot water and chemicals; the sealing agent for inkjet printer heads; and the coating agent for various circuit boards.

### EXAMPLES

Examples of the invention are given below by way of illustration and not by way of limitation. Parts are by weight.

### Example 1

A planetary mixer was charged with 58 parts of a polymer having formula (9) below (viscosity 5,000 mm²/s, vinyl content 0.012 mol/100 g), 17 parts of a polymer having formula (10) below (viscosity 600 mm²/s, vinyl content 0.023 mol/100 g), and 25 parts of Demnum S-65 (perfluoropolyether oil by Daikin Industries, Ltd.). The contents were mixed until uniform. To the mixture, 0.02 part of an ethanol solution of platinum-divinyltetramethyldisiloxane complex (Pt concentration 3.0 wt%), 0.12 part of a fluorinated acetylene alcohol having formula (11) below, and 18.4 parts of a fluorinated organohydrogensiloxane having formula (12) below (Si-H content 0.00062 mol/g) were added in sequence and mixed until uniform, yielding a curable composition.

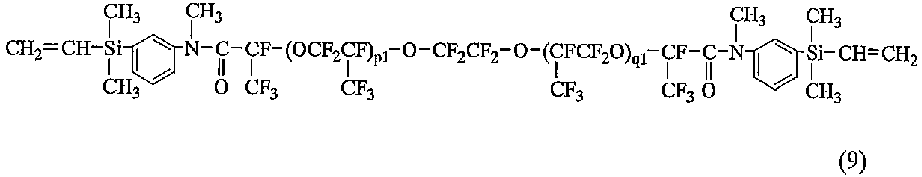

The average value of p1+q1 (indicative of weight average molecular weight) is 90.

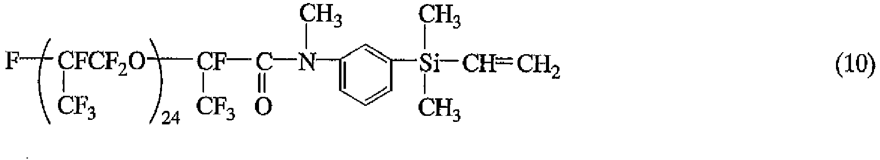

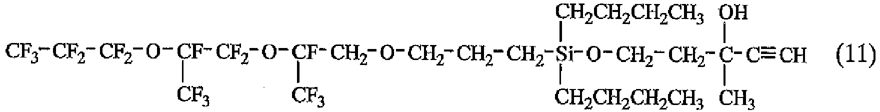

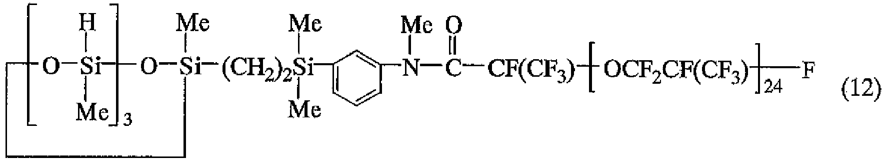

### Example 2

A curable composition was prepared as in Example 1 aside from using 0.12 part of a fluorinated acetylene alcohol having formula (13) below instead of the fluorinated acetylene alcohol having formula (11).

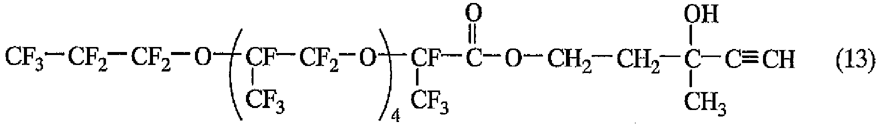

### Comparative Example 1

A curable composition was prepared as in Example 1 aside from using 0.12 part of a 50 wt% toluene solution of ethynyl hexanol instead of the fluorinated acetylene alcohol having formula (11).

### Comparative Example 2

A curable composition was prepared as in Example 1 aside from using 0.12 part of 3-methyl-1-butyn-3-ol instead of the fluorinated acetylene alcohol having formula (11).

### Evaluation of dispersion of curable composition

Each of the curable compositions of Examples and Comparative Examples was allowed to stand at 23°C for 14 days, after which it was observed for any change of outer appearance. The results are shown in Table 1.

**Table 1**

| | Example | | Comparative Example | |
|---|---|---|---|---|
| | 1 | 2 | 1 | 2 |
| Initial | transparent | transparent | transparent | transparent |
| After 23°C/14 days storage | transparent | transparent | platinum complex separated out on surface | platinum complex separated out on surface |

As seen from Table 1, the use of fluorinated acetylene alcohol as reaction regulator improves the dispersion of its coordinate complex compound with the platinum catalyst in the composition.

### Evaluation of curability, cured hardness and storage stability with vacuum deaeration time

Each of the curable compositions of Examples and Comparative Examples was deaerated under a pressure of -1,070 Pa for a time of 1, 10 or 20 minutes. The influence of deaeration on curability, cured hardness and storage stability was examined as a function of deaeration time. The results are shown in Tables 2 and 3.

DSC peak temperature was measured by heating at a rate of 12.5°C/min from 25°C to 150°C, and recording the temperature of heat release peak. After the composition was heat cured at 150°C for one hour, a penetration of the cured product was measured according to ASTM D-1403 using a 1/4 cone. The viscosity of the composition was measured at 23°C according to JIS K7117-1, both at the initial and after storage at 23°C for 14 days.

**Table 2**

| | Example 1 | | | Example 2 | | |
|---|---|---|---|---|---|---|
| Vacuum deaeration time (min) | 1 | 10 | 20 | 1 | 10 | 20 |
| DSC peak temperature (°C) | 125 | 125 | 124 | 127 | 127 | 127 |
| Penetration of cured product | 54 | 54 | 53 | 55 | 55 | 54 |
| Initial viscosity (mPa·s) | 2,100 | 2,100 | 2,110 | 2,050 | 2,050 | 2,060 |
| Viscosity after 23°C/14 days storage (mPa·s) | 2,110 | 2,120 | 2,120 | 2,070 | 2,060 | 2,080 |

**Table 3**

| | Comparative Example 1 | | | Comparative Example 2 | | |
|---|---|---|---|---|---|---|
| Vacuum deaeration time (min) | 1 | 10 | 20 | 1 | 10 | 20 |
| DSC peak temperature (°C) | 123 | 121 | 115 | 123 | 118 | 113 |
| Penetration of cured product | 50 | 49 | 48 | 50 | 48 | 47 |
| Initial viscosity (mPa·s) | 2,090 | 2,100 | 2,120 | 2,220 | 2,180 | 2,150 |
| Viscosity after 23°C/14 days storage (mPa·s) | 2,150 | 2,240 | 2,320 | 2,280 | 2,370 | 2,560 |

As seen from Tables 2 and 3, the use of non-volatile reaction regulator, fluorinated acetylene alcohol ensures consistent curability, cured hardness, and storage stability independent of the vacuum deaeration time.

## Claims

1. A curable fluoropolyether-based gel composition consisting of
(A) 100 parts by weight of a linear polyfluoro compound containing at least two alkenyl groups per molecule and having a perfluoropolyether structure in the backbone,
(B) 1 to 300 parts by weight of a polyfluoromonoalkenyl compound containing one alkenyl group per molecule and having a perfluoropolyether structure in the backbone,
(C) a fluorinated organohydrogensiloxane having at least two silicon-bonded hydrogen atoms (i.e., SiH groups) and at least one monovalent perfluoroalkyl, monovalent perfluorooxyalkyl, divalent perfluoroalkylene or divalent perfluorooxyalkylene which is linked with the silicon atoms through a divalent linkage selected from among the following groups: -CH₂CH₂-, -CH₂CH₂CH₂-, - CH₂CH₂CH₂OCH₂-, -CH₂CH₂CH₂-NH-CO-, -CH₂CH2CH₂-N (Ph) -CO-, -CH₂CH₂CH₂-N(CH₃)-CO-, -CH₂CH₂CH₂-N (CH₂CH₂)-CO-, -CH₂CH₂-Si (CH₃)₂-Ph'-N(CH₃)-CO-, -CH₂CH₂CH₂-Si(CH₃)₂-Ph'-N(CH₃)-CO-, and -CH₂CH₂CH₂-O-CO-, per molecule, in an amount to provide 0.5 to 3.0 moles of SiH groups per mole of alkenyl groups in components (A) and (B),
(D) a platinum group metal-based hydrosilylation catalyst in an amount to provide 0.1 to 500 ppm of platinum group metal,
(E) 0.05 to 3.0 parts by weight of a fluorinated acetylene alcohol, and
(F) 0 to 150 parts by weight per 100 parts by weight of components (A) and (B) combined of at least one perfluoropolyether compound selected from compounds having the general formulae (1) to (3):
A-O-(CF₂CF₂CF₂O)ₐ-A (1)
wherein A is a group of the formula: C_{b}F_{2b+1}-, a is an integer of 1 to 500, and b is an integer of 1 to 3,
A-O-(CF₂O)_{c}-(CF₂CF₂O)_{d}-A (2)
wherein A is as defined above, c and d each are an integer of 1 to 300, 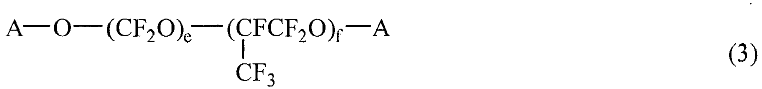 wherein A is as defined above, e and f each are an integer of 1 to 300,
wherein the fluorinated acetylene alcohol (E) has the general formula (5) or (6): 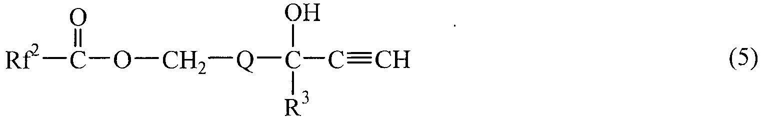 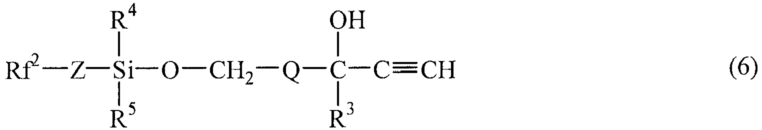 wherein Rf² is a perfluoroalkyl group of 3 to 100 carbon atoms, which may be separated by an ether bond and which may be branched, Q is a divalent hydrocarbon group of 1 to 6 carbon atoms, R³, R⁴ and R⁵ are each independently an alkyl group of 1 to 4 carbon atoms, and Z is a divalent organic group of 1 to 20 carbon atoms.

2. The composition of claim 1 wherein component (F) is blended in an amount of 0.1 to 100 parts by weight per 100 parts by weight of components (A) and (B) combined.

3. The composition of claim 1 or 2 wherein component (A) is a partially branched linear polyfluoro compound of the general formula (4):
CH₂=CH-(X)_{g}-Rf¹-(X')_{g}-CH=CH₂ (4)
wherein X is -CH₂-, -CH₂O-, -CH₂OCH₂- or -Y-NR¹-CO-, wherein Y is -CH₂-, -Si(CH₃)₂CH₂CH₂CH₂-, - Si (CH₃) (CH=CH₂)CH₂CH₂CH₂, or an o-, m- or p-dimethylsilylphenylene group of the structural formula (Z): 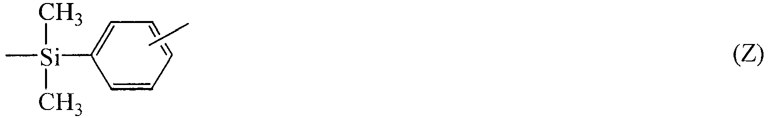
and R¹ is hydrogen or a substituted or unsubstituted monovalent hydrocarbon group,
X' is -CH₂-, -OCH₂-, -CH₂OCH₂- or -CO-NR²-Y'-,
wherein Y' is -CH₂-, -CH₂CH₂CH₂Si(CH₃)₂-, - CH₂CH₂CH₂Si(CH₃) (CH=CH₂)-, or an o-, m- or p-dimethylsilylphenylene group of the structural formula (Z'): 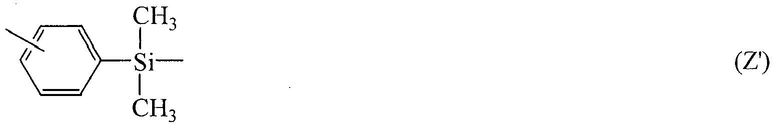 and R² is as defined for R¹,
Rf¹ is a divalent perfluoropolyether group of the general formula (i) or (ii): 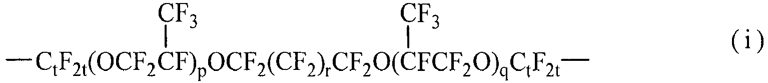 wherein p and q each are an integer from 1 to 150, the sum p+q is from 2 to 200 on average, r is an integer from 0 to 6, and t is 2 or 3, 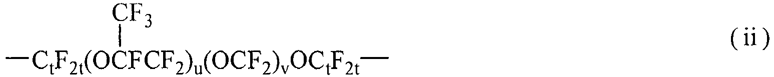
wherein u is an integer from 1 to 200, v is an integer from 1 to 50, t is as defined above, and
g is independently 0 or 1.

4. A gel article comprising a cured product of the curable fluoropolyether-based gel composition of any one of claims 1 to 3.

5. Use of the gel article of claim 4 in automobiles, chemical plants, inkjet printers, semiconductor manufacturing lines, analytical and scientific instruments, medical equipment, aircraft or fuel cell systems.

## Patentansprüche

1. Härtbare Gelzusammensetzung auf Fluorpolyetherbasis, bestehend aus
(A) 100 Gewichtsteilen einer linearen Polyfluorverbindung, die mindestens zwei Alkenylgruppen pro Molekül enthält und im Grundgerüst eine Perfluorpolyetherstruktur aufweist,
(B) 1 bis 300 Gewichtsteilen einer Perfluormonoalkenylverbindung, die eine Alkenylgruppe pro Molekül enthält und im Grundgerüst eine Perfluorpolyetherstruktur aufweist,
(C) einem fluorierten Organohydrogensiloxan mit mindestens zwei Silicium-gebundenen Wasserstoffatomen (d.h. SiH-Gruppen) und mindestens einem einwertigen Perfluoralkyl, einwertigen Perfluoroxyalkyl, zweiwertigen Perfluoralkylen oder zweiwertigen Perfluoroxyalkylen, das mit den Siliciumatomen über eine zweiwertige Bindung verknüpft ist, gewählt aus den folgenden Gruppen: -CH₂CH₂-, -CH₂CH₂CH₂-, -CH₂CH₂CH₂OCH₂-, -CH₂CH₂CH₂-NH-CO-, -CH₂CH₂CH₂-N(Ph)-CO-, -CH₂CH₂CH₂-N(CH₃)-CO-, CH₂-CH₂CH₂-N(CH₂CH₂)-CO-, -CH₂CH₂-Si(CH₃)₂-Ph'-N(CH₃)-CO-, -CH₂CH₂CH₂-Si(CH₃)₂-Ph'-N(CH₃)-CO und - CH₂CH₂CH₂-O-CO-, pro Molekül, in einer Menge, um 0,5 bis 3,0 Mole an SiH-Gruppen pro Mol der Alkenylgruppen in Komponenten (A) und (B) vorzusehen,
(D) einem Hydrosilylierungskatalysator auf Platingruppenmetallbasis in einer Menge, um 0,1 bis 500 ppm Platingruppenmetall vorzusehen,
(E) 0,05 bis 3,0 Gewichtsteilen eines fluorierten Acetylenalkohols, und
(F) 0 bis 150 Gewichtsteilen pro 100 Gewichtsteilen der kombinierten Komponenten (A) und (B) mindestens einer Perfluorpolyetherverbindung, gewählt aus Verbindungen der allgemeinen Formeln (1) bis (3):
A-O-(CF₂CF₂CF₂O)ₐ-A (1)
worin A eine Gruppe der Formel ist: C_{b}F_{2b+1}-, a eine ganze Zahl von 1 bis 500 ist, und b eine ganze Zahl von 1 bis 3 ist,
A-O-(CF₂O)_{c}-(CF₂CF₂O)_{d}-A (2)
worin A wie oben definiert ist, c und d jeweils eine ganze Zahl von 1 bis 300 sind, 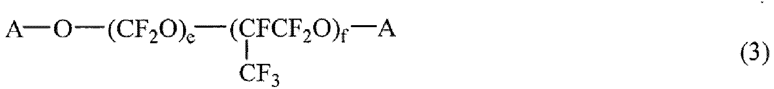 worin A wie oben definiert ist, e und f jeweils eine ganze Zahl von bis 1 bis 300 sind,
wobei der fluorierte Acetylenalkohol (E) die allgemeine Formel (5) oder (6) aufweist: 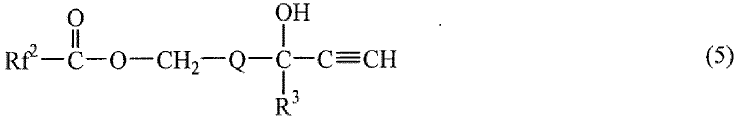 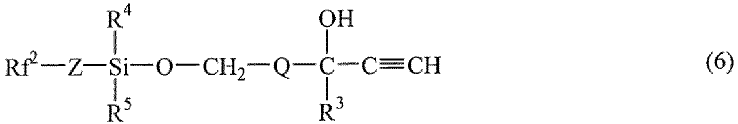 worin Rf² eine Perfluoralkylgruppe mit 3 bis 100 Kohlenstoffatomen ist, die durch eine Etherbindung getrennt sein kann, und welche verzweigt sein kann, Q eine zweiwertige Kohlenwasserstoffgruppe mit 1 bis 6 Kohlenstoffatomen ist, R³, R⁴ und R⁵ jeweils unabhängig eine Alkylgruppe mit 1 bis 4 Kohlenstoffatomen sind, und Z eine zweiwertige organische Gruppe mit 1 bis 20 Kohlenstoffatomen ist.

2. Zusammensetzung nach Anspruch 1, wobei Komponente (F) in einer Menge von 0,1 bis 100 Gewichtsteilen pro 100 Gewichtsteilen der kombinierten Komponenten (A) und (B) eingemischt ist.

3. Zusammensetzung nach Anspruch 1 oder 2, wobei Komponente (A) eine teilweise verzweigte, lineare Polyfluorverbindung der allgemeinen Formel (4) ist:
CH₂=CH-(X)_{g}-Rf¹-(X')_{g}-CH=CH₂ (4)
worin X -CH₂-, -CH₂O-, -CH₂OCH₂- oder -Y-NR¹-CO- ist,
worin Y -CH₂-, -Si(CH₃)₂CH₂CH₂CH₂-, -Si(CH₃)(CH=CH₂)CH₂CH₂CH₂- oder eine o-, m- oder p-Dimethylsilylphenylengruppe der Strukturformel (Z) ist: 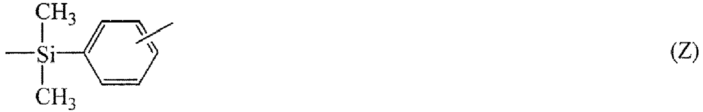 und R¹ Wasserstoff oder eine substituierte oder unsubstituierte, einwertige Kohlenwasserstoffgruppe ist,
X' -CH₂-, -OCH₂-, -CH₂OCH₂- oder -CO-NR²-Y'- ist,
worin Y' -CH₂-, -CH₂CH₂CH₂Si(CH₃)₂-, -CH₂CH₂CH₂Si(CH₃)(CH=CH₂)- oder eine o-, m- oder p-Dimethylsilylphenylengruppe der Strukturformel (Z') ist: 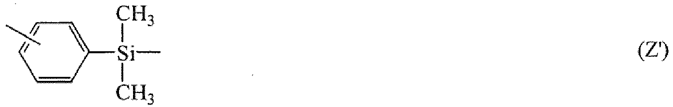 worin R² wie für R¹ definiert ist,
Rf¹ eine zweiwertige Perfluorpolyethergruppe der allgemeinen Formel (i) oder (ii) ist: 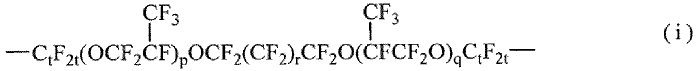 worin p und q jeweils eine ganze Zahl von 1 bis 150 sind, die Summe aus p+q im Durchschnitt 2 bis 200 ist, r eine ganze Zahl von 0 bis 6 ist, und t 2 oder 3 ist, 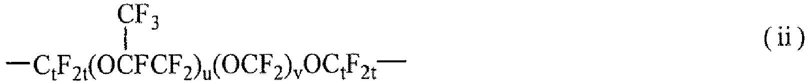 worin u eine ganze Zahl von 1 bis 200 ist, v eine ganze Zahl von 1 bis 50 ist, t wie oben definiert ist, und
g unabhängig 0 oder 1 ist.

4. Gelartikel, umfassend ein gehärtetes Produkt aus der härtbaren Gelzusammensetzung auf Fluorpolyetherbasis nach mindestens einem der Ansprüche 1 bis 3.

5. Verwendung des Gelartikels nach Anspruch 4 in Kraftfahrzeugen, chemischen Anlagen, Tintenstrahldruckern, Halbleiterfertigungsanlagen, analytischen und wissenschaftlichen Instrumenten, medizinischer Ausrüstung, Flugzeugen oder Brennstoffzellensystemen.

## Revendications

1. Une composition de gel à base de fluoropolyéther durcissable constitué par
(A) 100 parties en poids d'un composé polyfluoro linéaire contenant au moins deux groupes alcényle par molécule et ayant une structure perfluoropolyéther dans le squelette,
(B) 1 à 300 parties en poids d'un composé polyfluoromonoalcényle contenant un groupe alcényle par molécule et ayant une structure perfluoropolyéther dans le squelette,
(C) un organohydrogénosiloxane fluoré ayant au moins deux atomes d'hydrogène liés à du silicium (c'est-à-dire des groupes SiH) et au moins un perfluoroalkyle monovalent, un perfluorooxyalkyle monovalent, un perfluoroalkylène divalent ou un perfluorooxyalkylène divalent qui est lié avec l'atome de silicium par le moyen d'un lien divalent choisi parmi les groupes suivants: -CH₂CH₂-, -CH₂CH₂CH₂-, -CH₂CH₂CH₂OCH₂-, -CH₂CH₂CH₂-NH-CO-, -CH₂CH₂CH₂-N(Ph)-CO-, -CH₂CH₂CH₂-N(CH₃)-CO-, -CH₂CH₂CH₂-N(CH₂CH₂)-CO-, -CH₂CH₂-Si(CH₃)₂-Ph'-N(CH₃)-CO-, -CH₂CH₂CH₂-Si(CH₃)₂-Ph'-N(CH₃)-CO-, -CH₂CH₂CH₂-O-CO-, par molécule, en une quantité pour fournir 0,5 à 3,0 moles de groupes SiH par mole de groupes alcényle dans les composants (A) et (B),
(D) un catalyseur d'hydrosilylation à base de métal du groupe du platine en une quantité pour fournir 0,1 à 500 ppm de métal du groupe du platine,
(E) 0,05 à 3,0 parties en poids d'un alcool d'acétylène fluoré, et
(F) 0 à 150 parties en poids pour 100 parties en poids des composants (A) et (B) combinés d'au moins un composé perfluoropolyéther choisi parmi les composés ayant les formule générales (1) à (3) :
A-O-(CF₂CF₂CF₂O)ₐ-A (1)
dans laquelle A représente un groupe selon la formule: C_{b}F_{2b+1}, a représente un nombre entier de 1 à 500, et b représente un nombre entier de 1 à 3,
A-O-(CF₂O)_{c}-(CF₂CF₂O)_{d}-A (2)
dans laquelle A est tel que défini en haut, c et d représentent chacun un nombre entier de 1 à 300, 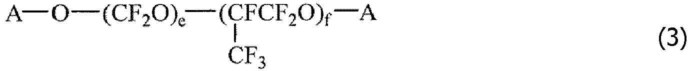 dans laquelle A est tel que défini en haut, e et f représentent chacun un nombre entier de 1 à 300,
dans laquelle l'alcool d'acétylène fluoré (E) à la formule générale (5) ou (6) : 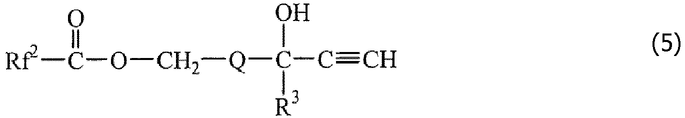 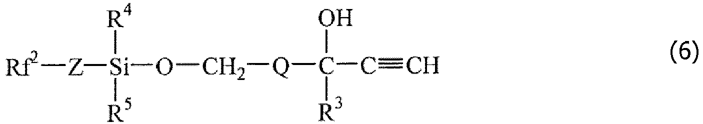 dans lesquelles Rf² représente un groupe perfluoroalkyle de 3 à 100 atomes de carbone, qui peuvent être séparé par une liaison éther et qui peuvent être ramifié, Q représente un groupe hydrocarbure divalent de 1 à 6 atomes de carbone, R³, R⁴ et R⁵ représentent chacun indépendamment un groupe alkyle de 1 à 4 atomes de carbone, et Z représente un groupe organique divalent de 1 à 20 atomes de carbone.

2. La composition selon la revendication 1, dans laquelle le composant (F) est mêlé en une quantité de 0,1 à 100 parties en poids pour 100 parties en poids des composants (A) et (B) combinés.

3. La composition selon la revendication 1 ou 2, dans laquelle le composant (A) est un composé polyfluoro linéaire partiellement ramifié selon la formule générale (4):
CH₂=CH-(X)_{g}-Rf¹-(X')_{g}-CH=CH₂ (4)
dans laquelle X représente -CH₂-, -CH₂O-, -CH₂OCH₂- ou -Y-NR¹-CO-,
dans laquelle Y représente -CH₂-, -Si(CH₃)₂CH₂CH₂CH₂-, -Si(CH₃)(CH=CH₂)CH₂CH₂CH₂-, ou un groupe o-, m- ou p-diméthylsilylphénylène selon la formule structurale (Z): 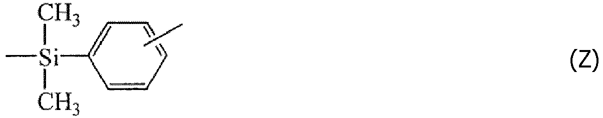 et R¹ représente un atome d'hydrogène ou un groupe hydrocarboné monovalent substitué ou non substitué,
X' représente -CH₂-, -OCH₂-, -CH₂OCH₂- ou -CO-NR²-Y^{'}-,
dans laquelle Y' représente -CH₂-, -CH₂CH₂CH₂Si(CH₃)₂-, -CH₂CH₂CH₂Si(CH₃)(CH=CH₂)-, ou un groupe o-, m- ou p-diméthylsilylphénylène selon la formule structurale (Z'): 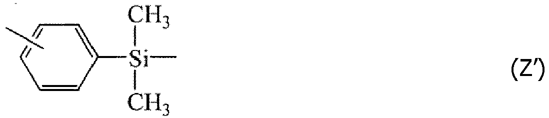 et R² est tel que défini pour R¹,
Rf¹ est un groupe perfluoropolyéther divalent selon la formule générale (i) ou (ii): 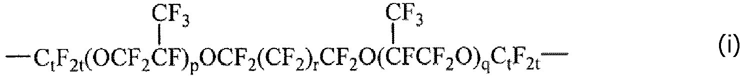 dans laquelle p et q sont chacun un nombre entier de 1 à 150, la somme p + q est de 2 à 200 en moyenne, r est un nombre entier de 0 à 6, et t est 2 ou 3, 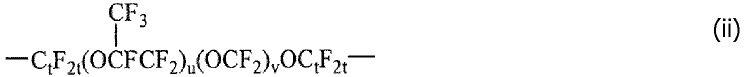 dans laquelle u est un nombre entier de 1 à 200, v est un nombre entier de 1 à 50, t est tel que défini en haut, et g est indépendamment 0 ou 1.

4. Un article en gel comprenant un produit durci de la composition de gel à base de fluoropolymère durcissable selon l'une quelconque des revendications 1 à 3.

5. Utilisation de l'article sur le gel selon la revendication 4 dans les automobiles, les usines chimiques, les imprimantes à jet d'encre, les lignes de fabrication de semiconducteurs, les instruments analytiques et scientifiques, les équipements médicaux, les avions ou les systèmes de piles à combustible.
